(19) Europäisches Patentamt
European Patent Office
Office européen des brevets

(11) **EP 4 346 054 A1**

(12) **EUROPEAN PATENT APPLICATION**

(43) Date of publication:
**03.04.2024 Bulletin 2024/14**

(21) Application number: **22198800.9**

(22) Date of filing: **29.09.2022**

(51) International Patent Classification (IPC):
**H02J 7/00** (2006.01)

(52) Cooperative Patent Classification (CPC):
**H02J 7/0019; H02J 7/0048**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **INVENTVM Semiconductor SRL 27100 Pavia (IT)**

(72) Inventors:
• **REZZI, Francesco**
  **27054 Montebello della Battaglia (PV) (IT)**
• **GRANOZIO, Domenico**
  **27010 Borgarello (PV) (IT)**
• **PINNA, Luigi**
  **27042 Bressana Bottarone (PV) (IT)**

(74) Representative: **Kraus & Lederer PartGmbB Thomas-Wimmer-Ring 15 80539 München (DE)**

(54) **ACTIVE BATTERY BALANCING DEVICE**

(57) The present invention relates to a device for active balancing of a battery (B), the battery (B) comprising a plurality of units ($U_1$ - $U_N$) connected in series at a plurality of nodes ($N_1$ - $N_{N-1}$), the device comprising at least one DC/DC converter (610) configured to transfer charges between a first group ($G_1$) of the plurality of units ($U_1$ - $U_N$) and a second group ($G_2$) of the plurality of units ($U_1$ - $U_N$), at least one of the first group ($G_1$) and second group $G_2$ comprising a plurality of the units ($U_1$ - $U_N$).

Fig. 6

EP 4 346 054 A1

**Description**

The invention generally relates to methods and devices for battery stack balancing based on partitioning the battery stack in groups and transferring charges among the groups.

**Prior art**

Electrical Vehicle battery packs, as well as other types of battery packs used in multiple applications, such as grid storage, domestic energy storage system and mobility light vehicles, are becoming more common.

Those battery packs are generally formed by a plurality of battery cells. A cell, may comprise a single physical battery cell, or a plurality of cells in parallel. In the context of the present application, reference to a cell can apply to both cases.

The battery pack is generally obtained by a plurality of cells connected in series to form a high voltage battery stack. This connection is often necessary since the single cell batteries usually have a low voltage. Typical values for Li-ion batteries range, for instance, from 3.3V to 3.8V depending on their chemical characteristics. On the other hand, battery-powered devices generally necessitate of higher voltages, to avoid high current values. This is even more the case for high-power applications, such as electric vehicles. For instance, battery packs for electric vehicles are known to be formed by a series of 96 of such cells. Those battery packs are usually referred to as 400V batteries. Similarly, battery packs with 800V may be implemented by connecting 192 cells in series.

Having a plurality of cells connected in series requires that these cells must be kept substantially equal, and in particular in terms of capacity and/or current delivery capability.

In fact, in a series connection, the weakest cell will determine the performance of the whole pack. For instance, when even a single cell is fully depleted the discharge of the whole pack is stopped, even though energy could be still available in other cells. Similarly, during charging, when a single cell reaches full capacity the charging process is stopped, even though additional energy could be stored in other cells.

To avoid this problem, Battery Management Systems, generally referred to as BMS, adopt balancing techniques that can balance the cells in such a way to keep them as much as possible in a similar state, and in particular at the same voltage level and/or at the same State of Charge (SoC). To do so, the balancing techniques generally measure the voltage of, and/or current flowing through, each cell. Such measurements can then be used to control the power flow, such that, for instance, the strongest cell will discharge more, and the weakest will discharge less. Balancing techniques are known to be operated both during charging and discharging.

Balancing techniques according to the prior art generally operate in two known manners.

A first technique, known as passive balancing, generally works by discharging the stronger cells to align them with the weakest cells. This is usually achieved by a passive load, such as a resistor. Excess of energy is then dissipated, making the system not efficient. For this reason, passive balancing generally only works at very low rate keeping the pack balanced on average over many charge and discharge cycles and it is generally limited to applications when the load is applied intermittently alternating long rest periods.

An alternative technique, known as active balancing, instead actively operates by moving energy from the stronger cells to the weakest. In this manner, energy is not wasted but moved from one cell to the other. To do so, active balancing generally uses DC-DC converters. The rate of energy exchange can therefore be much higher allowing a real time balancing of the whole battery pack, even during high power charge or long discharge periods.

Traditional active balancing devices are known, for instance, from DC2100B-D by Analog Devices, LT8584 by Linear Technology, or EM1402EVM by Texas Instruments.

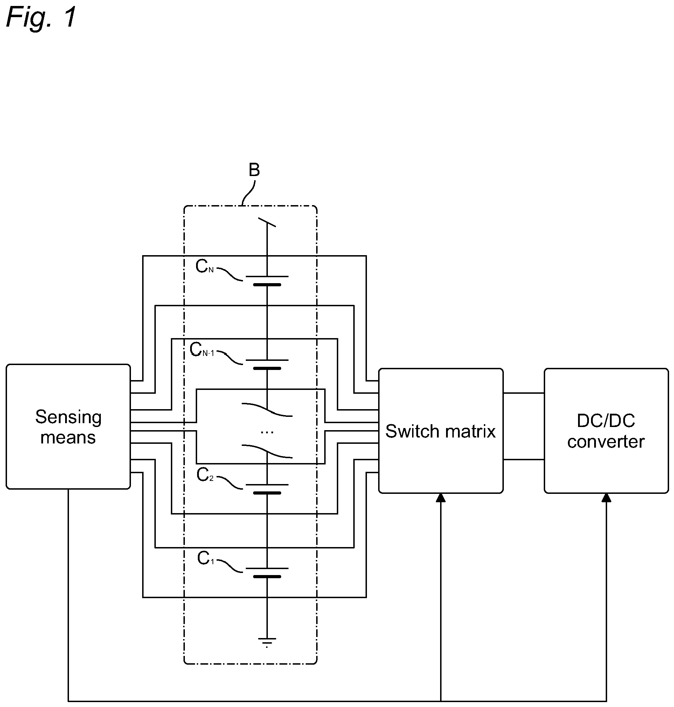

Figure 1 schematically illustrates a device for active balancing of a battery stack B comprising a plurality of cells $C_1$ - $C_N$.

The circuit comprises sensing means, for instance a voltage sensing unit, which is connected to each cell C, for measuring the voltage of the various cells. Similarly, a switch matrix is connected to each cell C, so as to be able to connect any two cells to the DC/DC converter. Based on the input from the sensing means, the switch matrix and the DC/DC converter are operated to transfer charges from any given cell to any other cell, as the need arise. For instance, if cell $C_N$ is determined to be the one with the most charge, and cell $C_1$ is determined to be the one with the least charge, the two cells can be connected to the DC/DC converter, and charges can be transferred from cell $C_N$ to cell $C_1$.

As it can be seen, the need to independently sense the voltage in each sell, as well as the need to be able to connect each cell independently to the DC/DC converter results in a high wiring complexity inside the battery pack. The wires furthermore require connectors which, due to aging and mechanical vibrations, decrease the robustness of the battery pack.

Additionally, a number of switches in the switch matrix must be present which allows the independent connection of any cell to the DC/DC converter. Generally, known switch matrixes require a minimum of two switches per cell, one on its positive and one on its negative pole, increasing costs and complexity. Those switches need their respective wires and connector.

Another factor that increases the wiring complexity is that the cells $C_1$ - $C_N$ are generally placed remotely with respect to a controlling module, where any of the sensing means, switch matrix and DC/DC converter are usually placed. Therefore, a force-and-sense wiring scheme is needed, effectively doubling the number of connections.

Moreover, since each cell is at a different voltage, and all the cells are connected in series, galvanic isolation, not illustrated, is often needed to allow charging and discharging of the cells by the DC/DC converter. In some of the solutions mentioned above from the state of the art, this is implemented as a transformer between the DC/DC converter and the cells. Such implementation requires bulky components.

All this increases costs and lowers reliability, as any of those elements are a possible failure point.

There is therefore a need to provide a balancing system which overcomes the drawbacks indicated above.

## Summary

This need is solved by the teaching of the invention, which is defined by the independent claims. The dependent claims provide further advantageous features.

Preferred embodiments of the invention in particular allow a device for active balancing of a battery to be obtained which reduces costs and/or complexity, which avoids the need for galvanic isolation, and/or decreases the switches and/or cables needed.

In general, the invention relies on the concept that balancing of the various cells can be achieved by dividing the battery stack in at least two groups and executing a transfer of charges between one group and the other group. By appropriately controlling how the cells in each group are selected, and preferably by repeating the transfer as needed, all cells can be made to converge.

An embodiment of the invention can therefore relate to a device for active balancing of a battery, the battery comprising a plurality of units connected in series at a plurality of nodes. The device can comprise at least one DC/DC converter configured to transfer charges between a first group of the plurality of units and a second group of the plurality of units. At least one of the first group and second group comprises a plurality of the units.

Thank to this arrangement it is advantageously possible to transfer charges between more than two units at once. This makes the circuitry needed for such transfer more efficient, as it requires less components than the circuitry needed for transferring charges between any single unit and any other single unit of the plurality of units. Moreover, by transferring charges between more than two units at once, convergence can be achieved in a faster and/or simpler manner than by transferring charges between only two units at any given time.

In some embodiments, at least one of the plurality of units can correspond to a physical battery cell.

Thank to this arrangement it is advantageously possible to apply the invention to known batteries, composed by a plurality of battery cells. This is particularly the case for batteries for higher-voltage applications such as battery for electric vehicles.

In some embodiments, at least one of the plurality of units can correspond to a plurality of physical battery cells connected in parallel and/or in series to each other.

Thank to this arrangement it is advantageously possible to apply the invention to units which are implemented by groups of battery cells, thus balancing the groups among each other.

In some embodiments, the device can further comprise a plurality of sensing means, each configured to measure at least one characteristic of a respective unit of the plurality of units and output a respective plurality of measured characteristics.

Thank to this arrangement it is advantageously possible to track the at least one characteristic of the various units, so as to allow the definition of the first and second group.

In some embodiments, the at least one characteristic can comprise one or more of:

- voltage,
- current,
- state of charge,
- state of health,
- amount of charge,
- temperature.

Thank to this arrangement it is advantageously possible to apply the invention based on various input data. Preferably, the at least one characteristic can also be the characteristic which is intended to be balances among the units. Thus the invention can advantageously allow balancing of various characteristics.

In some embodiments, the plurality of sensing means can be configured to wirelessly transmit the plurality of measured characteristics.

Thank to this arrangement it is advantageously possible to reduce the amount of cabling, switches and other components which are prone to failure and increase cost and complexity of the battery.

In some embodiments the device can further comprise a controller, configured to control operation of the DC/DC converter based on the plurality of measured characteristics.

Thank to this arrangement it is advantageously possible to control the operation of the DC/DC converter so as to make the units converge based on the input data provided by the plurality of sensing means.

In some embodiments, the controller can be configured to carry out a balancing method for a plurality of units. The balancing method can comprise a step of controlling the plurality of sensing means to measure the at least one characteristic of the plurality of units. The balancing method can further comprise a step of computing an error value for each of the plurality of nodes. The balancing method can further comprise a step of identifying a maximum error among the plurality of error values. The balancing method can further comprise a step of controlling the DC/DC converter to transfer charges between the first group and the second group, the first group and the second group being defined based on the node associated to the maximum error.

Thank to this arrangement it is advantageously possible to unambiguously define the two groups based on a computation of the error value.

In some embodiments, the error value can be defined such that the maximum error allows identification of a node, wherein the identified node divides the plurality of units in the first group and in the second group such that, when the steps of measuring, computing, identifying and transferring are executed a plurality of times, the plurality of units are made to converge to a balanced value.

Thank to this arrangement it is advantageously possible to implement various definitions of the error, as long as the definition allows the units to converge when those steps are repeated a plurality of times.

In some embodiments, the error value can be a function of a difference between an average of the least one characteristic of the second group and an average of the at least one characteristic of the plurality of units. Alternatively, or in addition, the error value can be a function of a difference between an average of the least one characteristic of the second group and an average of the at least one characteristic of the first group.

Thank to this arrangement it is advantageously possible to define the error value in two simple manners.

In some embodiments, the step of transferring can be performed for a predetermined time and can then be stopped.

Thank to this arrangement it is advantageously possible to allow the steps of measuring, computing, identifying and transferring to be executed a plurality of times in a simple manner, by implementing a timer.

In some embodiments, the step of transferring is performed until the maximum error is lower than a predetermined value.

Thank to this arrangement it is advantageously possible to allow the steps of measuring, computing, identifying and transferring to be executed a plurality of times in a simple manner, by implementing a comparator.

In some embodiments, the DC/DC converter can comprises a first terminal and a second terminal. The DC/DC converter can in particular be configured to convert a first DC voltage, provided at the first terminal into a second DC voltage, provided at the second terminal, and vice - versa. Moreover, the DC/DC converter can be is configured so that, when connected to a plurality of units, the first terminal is connected to a positive terminal of the plurality of units and the second terminal can be connected to any of the plurality of nodes.

Thank to this arrangement it is advantageously possible to implement the DC/DC converter and the respective switch matrix in a simple manner.

**Brief description of the drawings**

Figure 1 schematically illustrates a device for active balancing of a battery stack B comprising a plurality of battery cells $C_1$ - $C_N$,

Figure 2A schematically illustrates a device 200 for active balancing of a battery B comprising a plurality of units $U_1$ - $U_N$ and a respective plurality of sensing means $S_1$ - $S_N$,

Figures 2B-2D schematically illustrate possible implementation for the plurality of units $U_1$ - $U_N$,

Figures 3A, 3B, 4 and 5 schematically illustrate methods 300, 400 and 500 for active balancing of a battery B,

Figure 6 and 7 schematically illustrate DC/DC converters 610, 710 operable as a pack-to-unit or unit-to-pack DC/DC converter.

Figure 8 schematically illustrates a converging characteristic of a method for active balancing of a battery B.

**Detailed description of the drawings**

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired.

It is recognized that any circuit or other electrical device disclosed herein may include any number of microcontrollers, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co - act with one another to perform operation(s) disclosed herein. In addition, any one or more of the electrical devices may be configured to execute a program code that is embodied in a non - transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

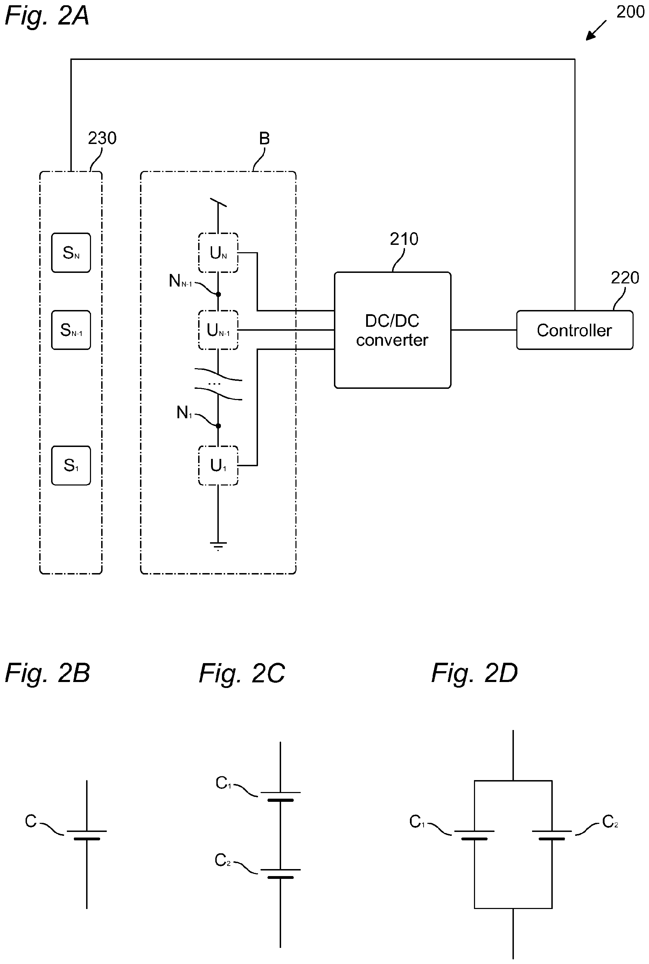

Figure 2A schematically illustrates a device 200 for active balancing of a battery B.

As visible in figure 2A, the battery B can comprise a plurality of units $U_1$ - $U_N$ connected in series at a plurality of nodes $N_1$ - $N_{N-1}$. The plurality of units $U_1$ - $U_N$ can comprise at least a first unit $U_1$ and a second unit $U_2$.

In general, each of the plurality of units $U_1$ - $U_N$ can be understood as comprising, or being implemented by, one or more physical units capable of storing charges. In case of more than one physical units per unit $U_1$ - $U_N$, the more than one physical units can be connected in series and/or in parallel among each other. In preferred embodiments the plurality of units $U_1$ - $U_N$ are of a single type. That is, each of the plurality of units $U_1$ - $U_N$ is preferably implemented in the same manner and has the same nominal characteristics.

It will be clear to those skilled in the art that a single unit can be implemented in a plurality of manners.

In particular, in some embodiments, as visible in figure 2B, at least one of the plurality of units $U_1$ - $U_N$, preferably a majority of the plurality of units $U_1$ - $U_N$, even more preferably all of the plurality of units $U_1$ - $U_N$, can comprise, or correspond to, a single physical battery cell C, such as, for instance, any of a pouch cell, a prismatic cell, or a cylindrical cell.

Alternatively, or in addition, in some embodiments, as visible in figure 2B, at least one of the plurality of units $U_1$ - $U_N$, preferably a majority of the plurality of units $U_1$ - $U_N$, even more preferably all of the plurality of units $U_1$ - $U_N$, can comprise, or correspond to, a plurality of physical battery cells $C_1$ - $C_2$ connected in series to each other. It will be clear that, although figure 2B only illustrates two cells, the invention is not limited thereto and that any number of cells can be implemented. As it will be evident to those skilled in the art, this implementation only allows balancing of the unit, and leaves it open whether and how the cells inside the unit are balanced among them. In some embodiments, such cells within a single unit could simply be left unbalanced, if this can be tolerated by the application. Alternatively, or in addition, known balancing methods could be implemented to the cells within the unit. Still alternatively, or in addition, the cells $C_1$ - $C_2$ within a given unit U could be balanced in the same manner described for the units $U_1$ - $U_N$ within a given battery B. That is, the approach described by the various embodiments of the invention could be applied to the series-connected cells of a unit, in substantially the same manner in which it is applied to the series-connected units of a battery.

Still alternatively, or in addition, in some embodiments, as visible in figure 2C, at least one of the plurality of units $U_1$ - $U_N$, preferably a majority of the plurality of units $U_1$ - $U_N$, even more preferably all of the plurality of units $U_1$ - $U_N$, can comprise, or correspond to, a plurality of physical battery cells $C_1$ - $C_2$ connected in parallel to each other. It will be clear that, although figure 2C only illustrates two cells, the invention is not limited thereto and that any number of cells can be implemented.

Still alternatively, or in addition, in some embodiments, at least one of the plurality of units $U_1$ - $U_N$, preferably a majority of the plurality of units $U_1$ - $U_N$, even more preferably all of the plurality of units $U_1$ - $U_N$, can comprise, or correspond to, a plurality of physical battery cells $C_1$ - $C_2$ connected in series to each other to form a first group, the first group being connected in parallel to one or more similar groups. Further alternatively, or in addition, in some embodiments, at least one of the plurality of units $U_1$ - $U_N$, preferably a majority of the plurality of units $U_1$ - $U_N$, even more preferably all of the plurality of units $U_1$ - $U_N$, can comprise, or correspond to, a plurality of physical battery cells $C_1$ - $C_2$ connected in parallel to each other to form a first group, the first group being connected in series to one or more similar groups.

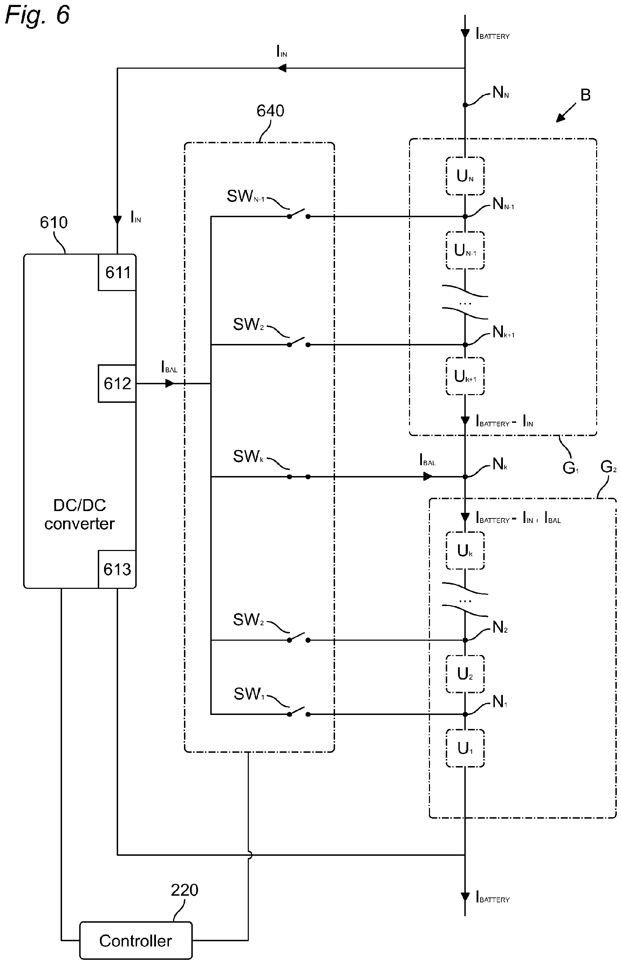

Among the plurality of units $U_1$ - $U_N$, at least two groups of units $G_1$ and $G_2$ can be defined. This is illustrated for instance in figure 6. Preferably, in some embodiments, only two groups can be defined which comprise all units $U_1$ - $U_N$.

In the following, for clarity of description, the group $G_1$ will be referred to as first group, while the group $G_2$ will be referred to as second group. It will be clear to those skilled in the art that embodiments of the invention can also operate with the opposite definition, namely $G_1$ being the second group and $G_2$ being the first group.

In the following a generic description of how the groups can be configured will be provided, followed by more specific examples. It will be understood by those skilled in the art that that the invention is not limited to those specific examples and that, in particular, the methods described in relation with those examples can be also applied to other definition of the groups, possibly by adapting the methods in a manner which will be clear to those skilled in the art based on the following description.

Thus, in general, in some embodiments, the first group $G_1$ can comprise a number of units from one terminal of the battery to a given node $N_k$. For instance, as illustrated in figure 6, the first group $G_1$ can comprise units from node $N_k$ towards the positive terminal, thus units $U_{k+1}$ to $U_N$. The second group $G_1$ can comprise a number of units from the opposite terminal of the battery to the same given node $N_k$. For instance, as illustrated in figure 6, the second group $G_2$ can comprise units from the negative terminal to node $N_k$, thus units $U_1$ to $U_k$.

Still alternatively, or in addition, the first group $G_1$ can comprise at least one, preferably at least two units among units $U_1$ - $U_N$, and the second group $G_2$ can comprise at least one, preferably at least two units among units $U_1$ - $U_N$, different from those of the first group.

Still alternatively, or in addition, the second group $G_2$ can comprise all units $U_1$ - $U_N$ not comprised in the first group $G_1$.

Further alternatively, or in addition, any of the first group $G_1$ and of the second group $G_2$ can comprise one or more units. In case more units are comprised, those can be connected in series to each other. That is, in case of a plurality of units, all the units in a given group can be connected in series to form a series-connected group.

Further alternatively, or in addition, the groups $G_1$ and $G_2$ can be defined by reference to the terminals 611-613 DC/DC converter 610, which will be described in the following.

Thus, in some embodiments, the first group $G_1$ can comprise units connected between a terminal 612 and a positive terminal 611 of the DC/DC converter 610. Alternatively, or in addition, the second group $G_2$ can comprise a number of units connected between the negative terminal 613 and the terminal 612 of the DC/DC converter 610. In some embodiments, as will be described in the following, the terminal 612 of the DC/DC converter 610 can be connected to the given node $N_k$ of the battery B which is comprised between, but different from, the nodes connected to the negative terminal 613 and the positive terminal 611. Here, the expression comprised between can be understood to mean that the node $N_k$ is connected along a series connection between the nodes respectively connected to the terminals 613 and 611.

This implementation is particularly advantageous as it allows the DC/DC converter 610 to operate with two terminals, 611 ad 613, fixedly connected to the units $U_1$ and $U_N$ respectively, or to the two terminals of the battery B, while the terminal 612 can be connected by the switch matrix 640 to the given node $N_k$. It will nevertheless clear to those skilled in the art that alternative embodiments can be implemented.

With reference again to figure 2A, the device 200 comprises at least one DC/DC converter 210 configured to transfer charges between the first group $G_1$ and the second group $G_2$.

In the following description, various examples will be described in which charges are transferred from the first group $G_1$ to the second group $G_2$. It will however be clear that the invention can also operate in the opposite direction. For the sake of clarity and conciseness of explanation, however, the invention will be described with reference to examples operating in the first manner. It is clear to those skilled in the art that the specular operation is possible, if needed.

Thanks to this configuration, the DC/DC converter 210 can transfer charges, for instance, from a number of more charged units, such as for instance units $U_{k+1}$ to $U_N$ of the first group $G_1$, to a number of less charged unit, such as for instance units $U_1$ to $U_k$ of the second group $G_2$.

More generally, the expression "more charged" can be understood to mean that a value of a physical characteristic of the battery, such as for instance voltage, current, absolute charge or SoC, is higher in the "more charged" group than in the "less charged group". In the following, for clarity of explanation and conciseness, the terms "more charged" and "less charged" will be used, it is however understood that they can be replaced by "with a higher value for the characteristic" and "with a lower value for the characteristic", respectively.

Furthermore, although this will become evident from the following examples, it is noted that the expression "more charged" and "less charged" do not necessarily relate to each unit of the group. That is, assuming that the units of the first group are more charged and those of the second group are less charged, it is not needed that each of the unit of the first group is more charged that each of the units of the second group. To the contrary, as will become evident from the following description, it is sufficient that the average charge of the first group is higher than the average charge of the second group. Thus, the terms "more charged" and "less charged" can be replaced by "with a higher average value for the characteristic" and "with a lower average value for the characteristic", respectively.

That is, instead of focusing on the state of each specific unit, the invention allows balancing of the units by operating in terms of groups of units, and by balancing the groups. This approach, particularly when repeated a plurality of times, allows converging of the units to a balanced state.

In other words, assuming for instance that the balancing is done based on the amount of charge, as the characteristic of the battery which is intended to be balanced, there might be a unit, such as unit $U_k$, with a lower amount of charge, and another unit, such as unit $U_N$, with a higher amount of charge.

In the prior art, this would be achieved by transferring charges specifically from $U_N$ to $U_k$, through a DC/DC converter.

On the other hand, in some embodiments of the invention, the second group $G_2$ can be defined to comprise unit $U_k$, for instance by including units $U_1$ to $U_k$ in the group. At the same time, the first group $G_1$ can be defined to comprise unit $U_N$, for instance by including by units $U_{k+1}$ to $U_N$, in the group. This allows charges to be transferred from all of the units in the first group $G_1$, including $U_N$, to all of the units in the second group $G_2$, including $U_k$. This then results in the unit $U_k$ being charged and in the unit $U_N$ being discharged, as intended.

This approach results in remaining units of the second group to be charged as well, and in remaining units of the first group to be discharged as well. Nevertheless, by repeating the process with an appropriate computation of the groups, all units can be made to converge to a balanced state. Preferably, in some embodiments the controller is configured so that during, as well as a result of, the charge transfer, none of the units overcharges or overdischarges.

That is, as will become even clearer from the following description, instead of charging/discharging a single unit with a connection to another single unit, embodiments of the invention can transfer charges between the groups. In the end, this results in at least one unit being discharged and at least one units being charged, however it allows to do so with less hardware than in the prior art.

It will be clear to the skilled person that several types of DC/DC converters can be implemented to obtain this characteristic. In the following description, some specific embodiments are discussed, which are particularly advantageous. However, the invention is not to be limited to such specific embodiments and any type of DC/DC converter capable of performing the functionality described above can be in principle implemented.

As further visible in figure 2A, the device 200 can further comprise a plurality of sensing means 230, singularly indicated as $S_1$ - $S_N$. Each of the plurality of sensing means 230 can be configured to measure at least one characteristic of a respective unit of the plurality of units $U_1$ - $U_N$. The plurality of sensing means 230 can thus output a respective plurality of measured characteristics.

It will be clear to those skilled in the art that the sensing means can alternatively be configured to measure at least one characteristic of a respective node of the plurality of nodes $N_1$ - $N_{N-1}$, or nodes $N_1$ - $N_N$. That is, the sensing means can measure the characteristics of one or more units, or of one or more nodes. It is clear to those skilled in the art that those two measurements can be converted into each other. For instance, the voltage at node $N_k$ can be measured directly or determined from the sum of the voltages at units $U_1$ to $U_k$. In some preferred embodiments, the measurements are done preferably on each single unit, as this allows for lower voltages being measured, which simplify the components needed. Moreover, this allows the direct measurements of the characteristic of the units, which simplifies the determination of which one or more units need to receive charge, and which one or more units can be used to provide charge. For instance, with reference to figure 2A, sensing means $S_1$ can measure at least one characteristic of unit $U_1$, sensing means $S_N$ can measure at least one characteristic of unit $U_N$, etc. In preferred embodiments, the number of sensing means 230 is equal to, or bigger than, the number of units $U_1$ - $U_N$.

In some embodiments, each single sensing means can comprise a plurality of sensing devices. For instance, if the sensing means are to measure two characteristic of a respective unit, such as temperature and voltage, the sensing means can comprise two devices, such as a thermometer and a voltage sensor.

In preferred embodiments, the at least one characteristic can comprise one or more of:

- voltage,
- current,
- state of charge,
- state of health,
- amount of charge,
- temperature.

It will be clear that there might be cases in which a characteristic cannot be directly measured, such as the state of health of a unit, SoH. In those cases, the sensing means 230 can measure one or more characteristics of the unit which can actually be directly measured, such as voltage, current, temperature, and derive the characteristic that cannot be directly measured by appropriate algorithms and/or computations, in manners which are per-se known.

As visible in figure 2A, in some embodiments, the plurality of sensing means 230 can be configured to transmit the plurality of measured characteristics to the controller 220.

This can be implemented by one or more cables. For instance, each of the plurality of sensing means 230 can be connected to the controller 220. Alternatively, the plurality of sensing means 230 can be connected to the controller 220 by a single cable, such as for instance a bus.

Alternatively, or in addition, the transfer of the plurality of measured characteristics to the controller 220 can be implemented wirelessly. Thanks to this implementation, the galvanic isolation required in the prior art is no longer necessary. Moreover, this drastically reduce the cabling requirements for the device 200, which reduces complexity and costs. Furthermore, this increases reliability, as each single cable is a potential failure point. Preferred embodiments of the invention can be implemented with a BLE or with a Zigbee wireless standard, as well as any customization needed, including but not limited to variation in then protocol stack and encryption.

As further visible in figure 2A, in some embodiments the device 200 can further comprise a controller 220, configured to control operation of the DC/DC converter 210 based on the plurality of measured characteristics.

For instance, as described above, the controller 220 can identify the two groups $G_1$ and $G_2$ based on the one or more measured characteristics, preferably such that group $G_2$ has a lower average value than the group $G_1$ for the one or more measured characteristics. The controller can then be operated to control the DC/DC converter, such that charges can be transferred between the group $G_1$ and the group $G_2$.

Assuming that the groups are defined such that $G_2$ is less charged than $G_1$, this approach transfer charges from group $G_1$ to group $G_2$. By doing so a plurality of times, preferably redefining the groups $G_1$ and $G_2$ each time, the units can be balanced.

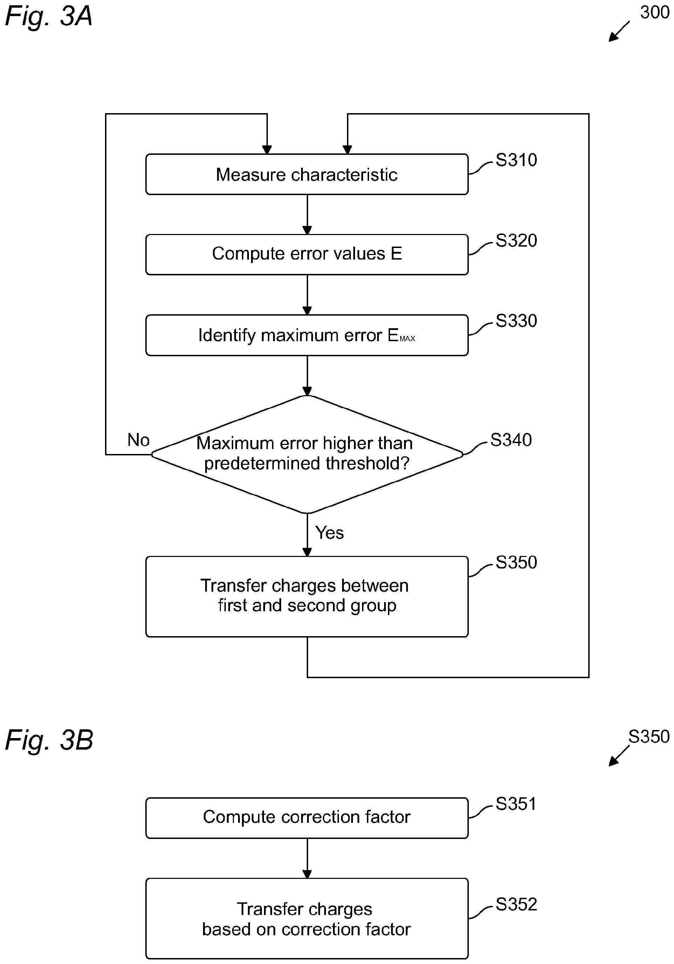

It will be clear to those skilled in the art that there might be a plurality of manners for ensuring that the definition of the groups, as well as the corresponding transfer of charges, is implemented a plurality of times, so as to allow convergence. Figures 3, 4 and 5 schematically illustrate methods 300, 400 and 500 for active balancing of a battery B, which all ensure such repetition of the method for a plurality of times. The methods can in particular be implemented by the controller 220.

In particular, as visible in figure 3, the controller 220 can configured to carry out a balancing method 300 for a plurality of units $U_1$-$U_N$.

The balancing method 300 comprises a step S310 of controlling the plurality of sensing means 230 to measure the at least one characteristic of the plurality of nodes $N_1$ - $N_{N-1}$. The following embodiment is described as based on the measured characteristic of the plurality of nodes $N_1$ - $N_{N-1}$. It will be clear to those skilled in the art that those measurements can be performed directly, or can be derived from the measured characteristic of the plurality of units $U_1$ - $U_N$ as previously described.

It will be clear to those skilled in the art that this can be implemented in plurality of methods. For instance, the sensing means can measure the at least one characteristic continuously, or with a predetermined frequency, and the measuring step S310 can be implemented by outputting the last available measured data, preferably in response to a request from the controller 220. Alternatively, or in addition, the sensing means can start a measure in response to a request from the controller 220, and then provide the corresponding output to the controller. In general, the purpose of the measuring step S310 is to make available to the controller 220 the plurality of measured characteristics so that the controller can evaluate whether there is a need for balancing the units and which one or more units need to be balanced with which other one or more units.

The balancing method 300 can further comprise a step S320 of computing an error value E for each of the plurality of nodes $N_1$ - $N_{N-1}$. Various manners will be defined in the following which allows the computation of the error value. In general, the purpose of the error value E is to allow the identification of a node $N_k$ which, in turn, allows the definition of the first and second group. That is, the first and second groups $G_1$ and $G_2$, can be defined as a function of the given node $N_k$.

In particular, in some embodiments, the error value can be defined such that the maximum error $E_{MAX}$, among the plurality of error values, allows identification of a node $N_k$, and this node divides the units $U_1$ - $U_N$ in two groups $G_1$ and $G_2$, such that, when transferring charges between $G_1$ and $G_2$, the units $U_1$ - $U_N$ are made to converge to a balanced value.

This general approach can be implemented in plurality of manners, as will be clear to those skilled in the art, and it is not possible to define them all in the description. The following description will nevertheless provide two possible specific implementations which fit this definition, being based on the computation of a difference of average values.

In particular, a difference can be computed between an average of the least one characteristic of the second group $G_2$ and an average of the at least one characteristic of the plurality of units $U_1$ - $U_N$. Alternatively, or in addition, it can be computed between an average of the at least one characteristic of the second group $G_2$ and an average of at least one characteristic of the first group $G_1$. The error value can be computed as a function of the difference.

Thus, more formally, the error E(k) for a node $N_k$ separating $G_1$ from $G_2$ can be defined as:

$$E(k) = avg(\text{Phys\_char})_{G2} - avg(\text{Phys\_char})_{all\ units}$$

$$E(k) = avg(\text{Phys\_char})_{G2} - avg(\text{Phys\_char})_{G1}$$

where

- $avg(\text{Phys\_char})_{G1}$ is the average of at least one characteristic of the first group $G_1$,
- $avg(\text{Phys\_char})_{G2}$ is the average of at least one characteristic of the second group G2,
- $avg(\text{Phys\_char})_{all\ units}$ is the average of at least one characteristic of all units $U_1$ to U

The first case will be described first, a description of the latter case will follow. The description of the following examples will be based on the configuration of figure 6, in which the first group $G_1$ comprises units $U_{k+1}$ to $U_N$ while the second group $G_2$ comprises units $U_1$ to $U_k$.

In the first case, in some further embodiments, the error value E can be formally defined as

$$E(k) = \frac{1}{k}\sum_{i=1}^{k} \text{Phys\_char}(i) - \frac{1}{N}\sum_{i=1}^{N} \text{Phys\_char}(i) \quad k = 1, \dots, N-1$$

where

- Phys_char(i) is the measured characteristic of a unit $U_i$ for a given value of counter (i)
- k is indicative of a node $N_k$ among the nodes $N_1$ - $N_{N-1}$
- N is the number of units $U_1$ - $U_N$.

For instance, assuming ten units $U_1$-$U_N$ connected in series at nine nodes $N_1$-$N_{N-1}$ with a tenth node $N_N$ on the positive pole of the unit $U_N$, as visible in figure 6, and assuming the following exemplary values for the characteristic of the units $U_1$-$U_N$ and of the nodes $N_1$-$N_{N-1}$:

| Unit | $U_1$ | $U_2$ | $U_3$ | $U_4$ | $U_5$ | $U_6$ | $U_7$ | $U_8$ | $U_9$ | $U_{10}$ |
|---|---|---|---|---|---|---|---|---|---|---|
| Phys_char(i) Avg=2.89 | 3 | 2.9 | 2.8 | 2.7 | 2.6 | 2,8 | 3 | 3 | 3 | 3 |
| Node | $N_1$ | $N_2$ | $N_3$ | $N_4$ | $N_5$ | $N_6$ | $N_7$ | $N_8$ | $N_9$ | $N_{10}$ |
| Node(k) | 3 | 5.9 | 8.7 | 11.4 | 14 | 16.8 | 19.8 | 22.8 | 25.8 | 28.8 |

Using the exemplary Phys_char(i) of the units indicated above, the error value E(1) can be computed above as

$$E(1) = \frac{1}{1}\sum_{i=1}^{1} \text{Phys\_char}(i) - \frac{1}{10}\sum_{i=1}^{10} \text{Phys\_char}(i)$$

$$E(1) = 3 - \frac{1}{10}28{,}8 = 0.120$$

the error value E(2) can be computed above as

$$E(2) = \frac{1}{2}\sum_{i=1}^{2} \text{Phys\_char}(i) - \frac{1}{10}\sum_{i=1}^{10} \text{Phys\_char}(i)$$

$$E(2) = \frac{1}{2}5{,}9 - \frac{1}{10}28{,}8 = 0.070$$

and so on with

$$E(5) = \frac{1}{5}\sum_{i=1}^{5} \text{Phys\_char}(i) - \frac{1}{10}\sum_{i=1}^{10} \text{Phys\_char}(i)$$

$$E(5) = \frac{1}{5}14 - \frac{1}{10}28{,}8 = -0.080$$

and

$$E(6) = \frac{1}{6}\sum_{i=1}^{6} \text{Phys\_char}(i) - \frac{1}{10}\sum_{i=1}^{10} \text{Phys\_char}(i)$$

$$E(6) = \frac{1}{6}16{,}8 - \frac{1}{10}28{,}8 = -0.080$$

until

$$E(9) = \frac{1}{9}\sum_{i=1}^{9} \text{Phys\_char}(i) - \frac{1}{10}\sum_{i=1}^{10} \text{Phys\_char}(i)$$

$$E(9) = \frac{1}{9}25{,}8 - \frac{1}{10}28{,}8 = -0.013$$

resulting in

| $E_1$ | $E_2$ | $E_3$ | $E_4$ | $E_5$ | $E_6$ | $E_7$ | $E_8$ | $E_9$ |
|-------|-------|-------|-------|-------|-------|-------|-------|-------|
| 0.120 | 0.070 | 0.020 | -0.030 | -0.080 | -0.080 | -0.051 | -0.030 | -0.013 |

As further visible in figure 3A, the balancing method 300 can further comprise a step S330 of identifying a maximum error $E_{MAX}$, among the plurality of error values, and the unit and/or node associated to the maximum error $E_{MAX}$.

In some embodiments, the maximum error $E_{MAX}$ can be defined as the error having the highest maximum absolute value. In the numerical example above this corresponds to $E_1$, indicating that the correction can be advantageously applied at node $N_1$. That is, the node $N_1$ can be identified as being the node separating the two groups. In case two nodes have the same highest absolute value, any of the two nodes can be considered as the one with the maximum error $E_{MAX}$.

Moreover, in some embodiments, the sign of the maximum error $E_{MAX}$ can indicate the direction in which the charges are to be transferred. That is, if the maximum error $E_{MAX}$ has one between a positive or negative sign, the charges are to be transferred in one direction between the first group $G_1$ and second group $G_2$. Conversely, if the maximum error $E_{MAX}$ has the other one between the positive or negative sign, the charges are to be transferred in the other one direction between the first group $G_1$ and second group $G_2$. It will be clear to those skilled in the art that the specific sign and the specific direction are a function of the specific definition of the error. In the example above, for a positive sign, the charges are to be transferred from the second group $G_2$ to the first group $G_1$. That is, in this specific numerical example, the first transfer of charges would be operated from the unit $U_1$ to the units $U_2$-$U_N$.

As previously indicated, the characteristic under consideration can be any of a plurality of previously described characteristics.

Thus, in preferred embodiments, the error value E can be computed by using as measured characteristic the voltage value V for achieving a balance of the voltage among units. Using the same equation as above, this could then be implemented as

$$E(k) = \frac{1}{k}\sum_{i=1}^{k} V(i) - \frac{1}{N}\sum_{i=1}^{N} V(i) \ \ k = 1, \ldots, N-1$$

Alternatively, or in addition, in further preferred embodiments the error value E can be computed by using as measured characteristic the State of Charge, SoC, for achieving a balancing of the SoC among units, such as

$$E(k) = \frac{1}{k}\sum_{i=1}^{k} SoC(i) - \frac{1}{N}\sum_{i=1}^{N} SoC(i) \ \ k = 1, \ldots, N-1$$

Still alternatively, or in addition, in yet further preferred embodiments the error value E can be computed by using as measured characteristic the amount of available Charge, Q(i), for achieving a balancing of the charge among units, such as

$$E(k) = \frac{1}{k}\sum_{i=1}^{k} SoC(i) \times C(i) - \frac{1}{N}\sum_{i=1}^{N} SoC(i) \times C(i) \ \ k = 1, \ldots, N-1$$

since the capacity of the single unit may differ across units, the total charge Q(i) contained in a given unit *i* is *Q(i) = SoC(i) × C(i)*

The above embodiments have been described with respect to the definition of the error as

$$E(k) = avg(\text{Phys\_char})_{G2} - avg(\text{Phys\_char})_{all\ units}$$

As previously indicated, an alternative definition of the error E can also be as

$$E(k) = avg(\text{Phys\_char})_{G2} - avg(\text{Phys\_char})_{G1}$$

In this case, similarly to what has been described before, the error E could be formally expressed as

$$E(k) = \frac{1}{k}\sum_{i=1}^{k} \text{Phys\_char}(i) - \frac{1}{N-k}\sum_{i=k+1}^{N} \text{Phys\_char}(i) \ \ k = 1, \ldots, N-1$$

For example, with the above exemplary conditions of

| Unit | $U_1$ | $U_2$ | $U_3$ | $U_4$ | $U_5$ | $U_6$ | $U_7$ | $U_8$ | $U_9$ | $U_{10}$ |
|---|---|---|---|---|---|---|---|---|---|---|
| Phys_char(i) | 3 | 2.9 | 2.8 | 2.7 | 2.6 | 2.8 | 3 | 3 | 3 | 3 |

Using the Phys_char(i) of the units, the error value E(1) can be computed above as

$$E(1) = \frac{1}{1}\sum_{i=1}^{1} \mathrm{Phys\_char}(i) - \frac{1}{9}\sum_{i=2}^{10} \mathrm{Phys\_char}(i)$$

$$E(1) = 3 - \frac{1}{9}25,8 = 0.133$$

to

$$E(9) = \frac{1}{9}\sum_{i=1}^{9} \mathrm{Phys\_char}(i) - \frac{1}{1}\sum_{i=9}^{10} \mathrm{Phys\_char}(i)$$

$$E(5) = \frac{1}{9}25,8 - \frac{1}{1}3 = -0.133$$

resulting in

| $E_1$ | $E_2$ | $E_3$ | $E_4$ | $E_5$ | $E_6$ | $E_7$ | $E_8$ | $E_9$ | |
|---|---|---|---|---|---|---|---|---|---|
| 0.133 | 0.088 | 0.029 | -0.050 | -0.160 | -0.200 | -0.171 | -0.150 | -0.133 | |

In this case, by selecting as maximum error $E_{MAX}$ the one with the highest absolute value, the maximum error $E_{MAX}$ can be identified as E(6). Although this differs from the previously identified maximum error $E_{MAX}$, the invention can proceed as indicated above, and will nevertheless result in a convergence between all units after a number of cycles.

It has thus been shown that a plurality of manners are possible for indicating the node with the maximum error $E_{MAX}$, but they all will allow a transfer of charges which ultimately will make the units to converge. That is, the node $N_k$ identified based on the maximum error $E_{MAX}$ divides the plurality of units $U_1$ - $U_N$ in the first group $G_1$ and in the second group $G_2$ such that, when transferring charges between the first group $G_1$ and the second group $G_2$, preferably by executing a plurality of times the computation of the maximum error $E_{MAX}$ and the subsequent respective transfer of charges, the plurality of units $U_1$ - $U_N$ are made to converge to a balanced value.

As before, the sign of the maximum error $E_{MAX}$ can be used to identify in which directions charges are to be transferred. In this case, with the specific definition of the error, the negative sign indicates that charges are to be transferred from the first group $G_1$ to the second group $G_2$.

In general, it has thus been described how the balancing method 300 can comprise a step S350 of transferring charges between the first and second groups $G_1$, $G_2$, identified thanks to the identification of the given node $N_k$. As visible in figure 3A, in some embodiments, execution of the step S350 can be conditional on the outcome of an optional step S340, at which is it determined if the maximum error $E_{MAX}$ is above a predetermined threshold.

Referring to figure 6, it is evident how step S350 can be implemented. In particular, the battery B can flow a current $I_{BATTERY}$ at its poles. Part of this current, namely $I_{IN}$, can be directed to the DC/DC controller by a connection to the positive terminal of the battery and the terminal 611 of the DC/DC converter, so that the one or more units of the first group $G_1$ are crossed by a current $I_{BATTERY}-I_{IN}$.

The current $I_{IN}$ can be inputted into the DC/DC converter, resulting in an output current $I_{BAL}$. It will be clear that the DC/DC converter can apply any given conversion between $I_{IN}$ and $I_{BAL}$.

The switch matrix 640 can be controlled to connect the terminal 612 at any of the nodes of the battery, and in particular at any of nodes $N_1$ to $N_{N-1}$ of the battery. This already renders evident that, in comparison with the prior art, a reduced number of switches, namely equivalent to N-1, is sufficient for operating the invention.

More specifically, switch matrix 640 can be controlled so that terminal 612 is connected to the given node $N_k$. This thus results in the current $I_{BAL}$, outputted at terminal 612, to be provided to the second group G2, which will thus flow a current IBATTERY - $I_{IN}$ + $I_{BAL}$.

Assuming, in line with the numerical examples previously discussed, that charges are to be transferred from

$G_1$ to $G_2$, this would result in a positive value for $I_{IN}$. Assuming also, for the sake of simplicity, that $I_{BATTERY}$ is equal to zero, although the invention is not limited thereto, this would result in the units $U_{k+1}$ to $U_N$ of the first group to be discharged by a current $I_{IN}$ and the units $U_1$ to $U_k$ of the second group to be charged by a current $I_{IN}+I_{BAL}$.

In other words, by connecting the DC/DC converter to the given node $N_k$, it is possible to transfer charges between group $G_1$ and $G_2$.

As visible from figure 3A, after step S350, the transfer of charges can be stopped and the method 300 can start again. This, leads to the convergence of the units. In particular, the repeated execution of the steps S310, S320, S330 and S350 leads to the convergence of the units, independently on their initial configuration.

This is, in general, understandable from the description above. By transferring charges from the group of units which has a higher average of charges to the group of units which has a lower average of charges, the method will eventually make the units converge.

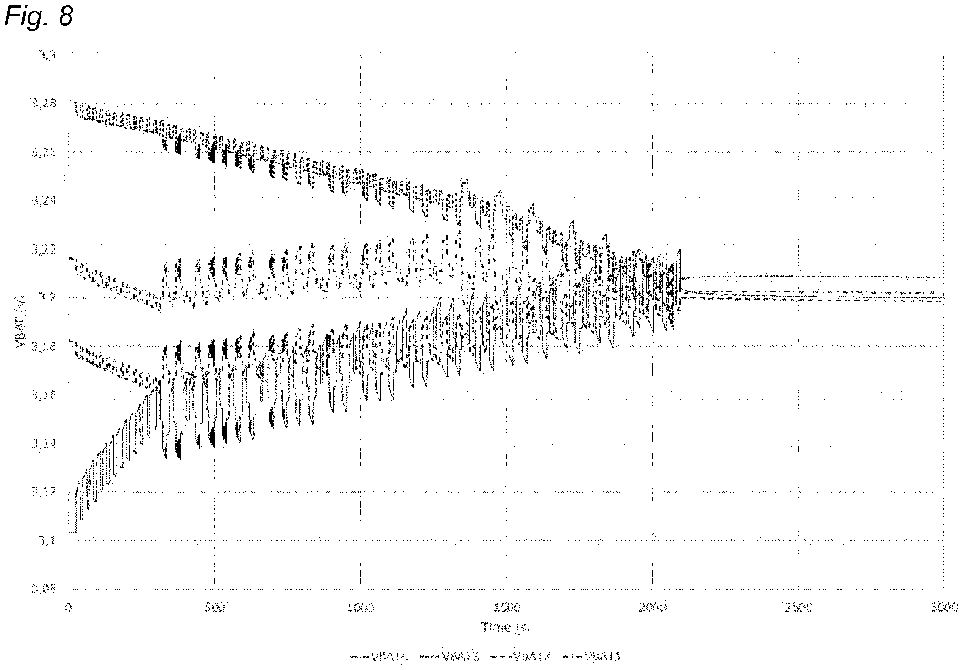

Figure 8 schematically illustrates how an exemplary configuration with four units, starting at different voltages, $V_{SAT1}$, $V_{BAT2}$, $V_{BAT3}$, $V_{BAT4}$, can converge to a substantially common voltage. The vertical axis indicates the voltage values while the horizontal axis indicates time.

It is in particular evident how, in this example, energy is firstly transferred from the three units with the highest voltage to the lowest-voltage unit in the first cycles. At approximately 300ms the definition of the groups changes, due to a change in the node having the maximum error $E_{MAX}$ and the transfer of charges changes accordingly, from the highest-charged unit to the three units with the lower charge, until convergence. It is remarked that this is only one of many possible evolution of the values of the units, which depends on the specific numerical values used for the example. The purpose of figure 8 is merely to show how the definition of the groups can change with time, and how the method described above can lead to convergence.

Figure 8 further schematically illustrates an exemplary implementation of step S340, in that the example stops transferring charges when the maximum error is below a certain threshold, indicating the a status has been reached which is deemed to be sufficiently converged.

In the description of method 300 above it has been assumed that step S350 is executed for a given duration and/or or for a given amount of charges transferred. It will be clear to those skilled in the art how this can be implemented. This is also visible in figure 8, where it is clearly recognizable that the transfer of charges is operated stepwisely.

As an example of possible manners to implement this, reference is made to methods 400 and 500.

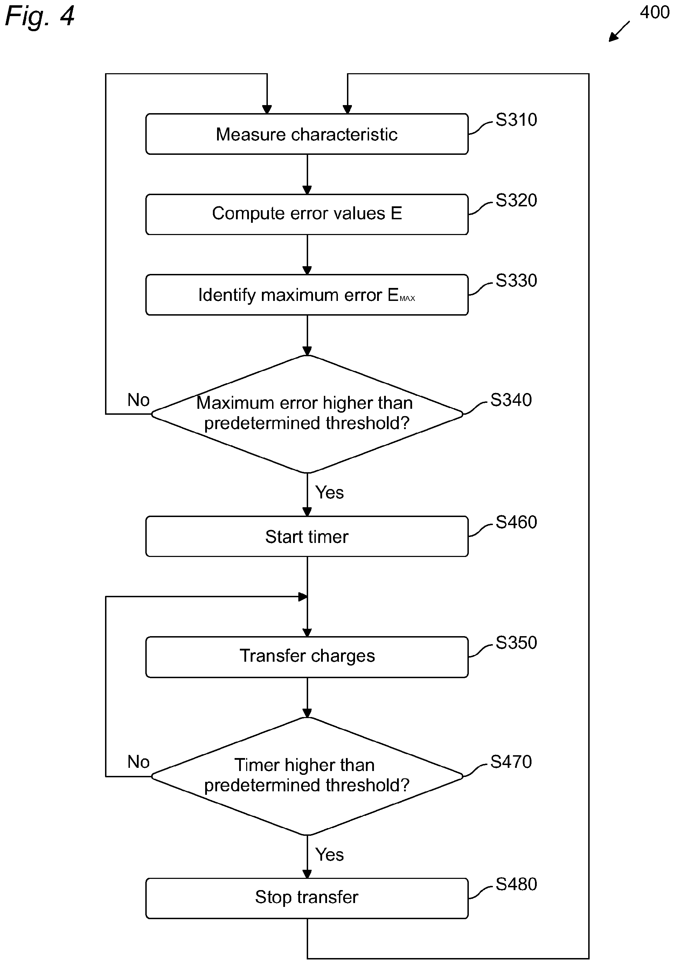

In particular, as visible in figure 4, the method 400 can be further generally configured so that the step S350 of transferring charges is performed for a predetermined time and then is stopped, before the method 400 starts again with the measure of the characteristics at step S310 and computation of a new set of error values, at step S320.

It will be clear to those skilled in the art that the limitation in time to the step S350 can be obtained in a plurality of manners, generally based on an indication given by a timer. In the embodiment of figure 4, this is achieved by starting a timer at a step S460, at any point prior to step S350 and preferably between steps S340 and S350. The correction can then be executed while the timer is running and, at a step S470, it can be checked if the timer has reached a predetermined value. If so, at a step S480, the correction can be stopped, and preferably the time can be reset. If not, the correction can continue until the timer has reached the predetermined value.

The value of the timer can be a predetermined value. In preferred embodiments the predetermined value can be at least 1ms, preferably at least 10ms. Alternatively, or in addition, the predetermined value can be at most 1s, preferably at most 100ms. The inventors have found that those values are particularly advantageous in that they allow a reliable and rapid convergence of the units while also ensuring that the transfer of charges do not lead to overcharged or undercharged units.

Alternatively, the value of the timer can be computed as a function of the maximum error $E_{MAX}$ and/or as a function of the correction value. Preferably, in some embodiments, the predetermined value of the timer is in a bijective correspondence with the maximum error $E_{MAX}$ and/or with the correction value. Even more preferably, the predetermined value of the timer can increase if the maximum error $E_{MAX}$ and/or the correction value increases, and/or the predetermined value of the timer can decrease if the maximum error $E_{MAX}$ and/or with the correction value decreases.

The presence of the timer ensures that the method is repeated a plurality of times, resulting in a converging balancing of the units. In particular, the repeated execution of the method 400, results in the repeated calculation of the error, which might be different from cycle to cycle. This can thus also results in a different correction from cycle to cycle which, however, as will be described below, makes the units converge to a balanced state. This also applies to the other methods described, in particular to method 300 and 500.

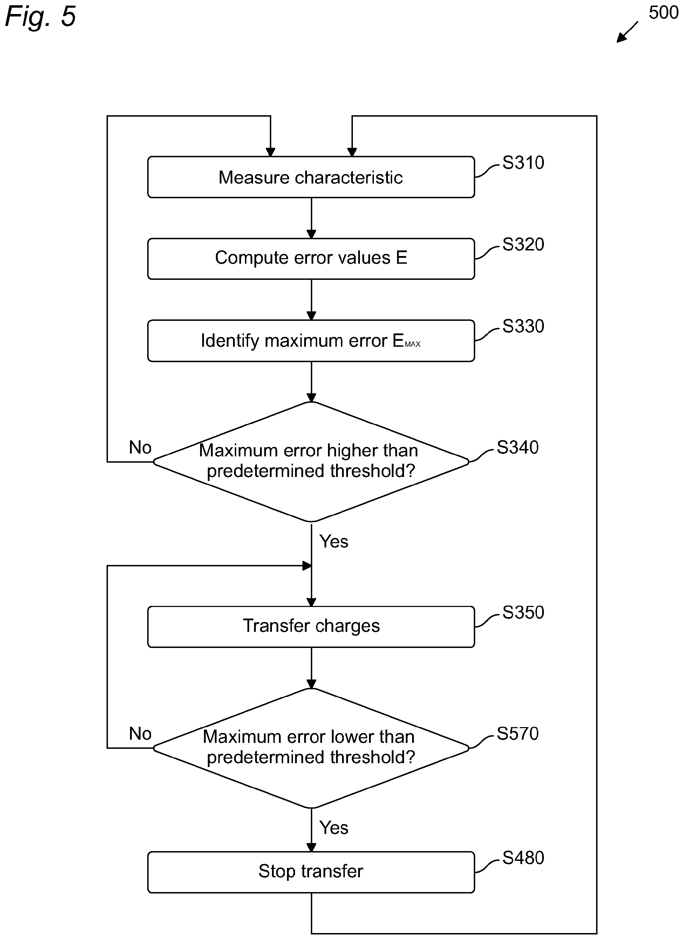

Alternatively, or in addition, as illustrated in figure 5, the step S350 of transferring charges can be performed until the maximum error $E_{MAX}$ value is lower than a predetermined value. In particular, a check can be implemented at step S570 to determine if the maximum error $E_{MAX}$ value is lower than a predetermined value. If so, the method can continue to step S480 where the correction is stopped.

It will be clear to those skilled in the art that methods of the invention can also comprise both steps S470 and S570. In preferred embodiments those two checks can be implemented so that both need to be satisfied before allowing the method to reach step S480. Alternatively, in some embodiments those two checks can be implemented so that both only one of them needs to be satisfied before allowing the method to reach step S480

In a specific exemplary embodiment, with reference to the previously discussed definitions of the error E, the correction can be implemented as a voltage balancing, preferably if the error E is computed based on the voltage. In this case the DC/DC converter 210 can be controlled to apply a voltage, or a current, to the given node, so that the voltage error at the given unit, or node, is rendered lower than a predetermined threshold and/or for a predetermined time.

In a further specific exemplary embodiment, with reference to the previously discussed definitions of the error E, the correction can be implemented as a SoC balancing, preferably if the error E is computed based on the SoC. In this case the DC/DC converter 210 can be controlled to apply a voltage, or a current, to the given node, so that the SoC error at the given unit, or node, is rendered lower than a predetermined threshold and/or for a predetermined time.

In a yet further specific exemplary embodiment, with reference to the previously discussed definitions of the error E, the correction can be implemented as an absolute charge balancing, preferably if the error E is computed based on the absolute value of the charge. In this case the DC/DC converter 210 can be controlled to apply a voltage, or a current, to the given node, so that the charge error at the given unit, or node, is rendered lower than a predetermined threshold and/or for a predetermined time.

In all cases, it will be appreciated how the methods 300, 400, 500 can be repeated a plurality of times, advantageously resulting in a convergence of the balancing of the units.

In the embodiments above, it has been generally indicated that the DC/DC converter transfer charges from one group to another. The total amount of charges, and/or how many charges are transferred per unit of time, namely, the value of the currents $I_{IN}$ and $I_{BAL}$ can be controlled by the DC/DC converter in various manners. For instance, the DC/DC converter can be controlled so as to transfer a predetermined amount of charges per cycle, that is, per application of the step S350.

Alternatively, or in addition, in some embodiments, as visible in figure 3B, the step S350 can also include a step S351 of computing a correction factor, and a step S352 of configuring the DC/DC converter so as to execute the transfer of the charges based on the correction factor.

In particular, in some embodiments, the correction factor can be computed based on the maximum error value $E_{MAX}$. Preferably, the correction factor can be expressed as $f(E_{MAX})$, where f can be a bijective function, more preferably a monotonic bijective function. Even more preferably, as the maximum error value $E_{MAX}$ increases, the correction factor can increase, and vice versa.

Once computed, the correction factor can be used to drive the value of $I_{BAL}$ and/or the time duration of the timer of steps S460, S470.

In particular, in some embodiments, the value of $I_{BAL}$ can be expressed as f(correction factor), where f can be a bijective function, even more preferably a monotonic bijective function. Even more preferably, as the correction factor increases, the value of $I_{BAL}$ can increase, and vice versa.

Similarly, in some embodiments, the timer duration can be expressed as f(correction factor), where f can be a bijective function, even more preferably a monotonic bijective function. Even more preferably, as the correction factor increases, the timer duration can increase, and vice versa.

In the description of the above embodiments, the DC/DC converter has been generally described as a bidirectional DC/DC converter, comprising two terminals 611 and 613 acting as first input, or output, and two terminals 612 and 613 acting as second output or, respectively, input, depending on the direction of operation of the conversion.

The terminals 611 and 613 are preferably connected in a fixed manner to the battery, preferably to the positive and negative terminals, respectively, while the terminal 612 can be connected to any node $N_k$ between the positive and negative terminals through a switch matrix 640.

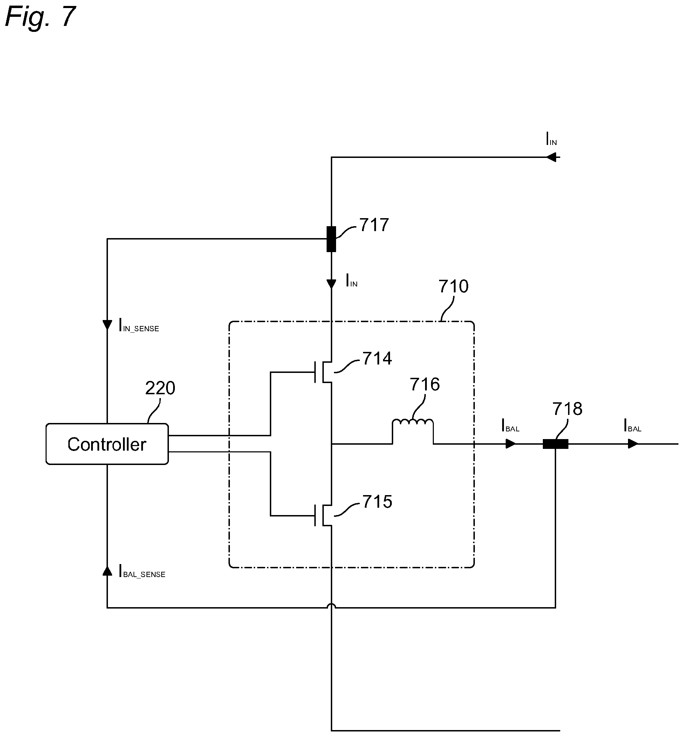

It will be clear to those skilled in the art that several configurations can be selected for implementing the DC/DC converter 210. Figure 7 schematically illustrates a possible implementation 710 of the DC/DC converter.

In this implementation, the DC/DC converter 710 comprises two switching means 714, 715, for instance two transistors connected in series at a common node. At this common node, the DC/DC converter 710 comprises a connection to an inductor 716. The operation of the DC/DC converter 710 can be based on indication of a current flowing through the switching means 714, indicated as $I_{IN}$ and/or based on indication of a current flowing through the inductor 716, indicated as $I_{BAL}$ in a manner per se known. In the embodiments, those indications are respectively provided to the controller 220 as $I_{IN\_SENSE}$ and as IBAL_SENSE through two respective sensing means 717 and 718. It will however be clear to the skilled person that alternative implementations are possible.

One advantage of this implementation is that it only uses one inductor 716 and, when implemented in the configuration illustrated in figure 6, a switch matrix 640 with only one switch $SW_k$ per any given node $N_k$. This implementation is therefore particularly simple and cost-effective.

A further advantage is that the output current is controlled for applying the correction to the given node $N_k$. This has the advantage that it is not needed to physically sense the output voltage at the node $N_k$ which might require additional sensing wires.

While several embodiments with various feature have been discussed and/or illustrated, it will be clear to those skilled in the art that the invention is not limited to those specific combinations of features. Instead, further embodiments can be obtained by combining features separately from one or more embodiments, within the scope of the claims.

**List of reference numerals**

B: battery
$C_1$ - CN: cell
200: device for active balancing of a battery
210: DC/DC converter
220: controller
230, $S_1$ - $S_N$: sensing means
$U_1$ - $U_N$: battery unit
300: method for active balancing of a battery
S310: characteristic measuring step
S320: error computing step
S330: maximum error identifying step
S340: maximum error checking step
S350: charges transferring step
S351: correction factor computation step
S352: charges transferring step
400: method for active balancing of a battery
S460: timer starting step
S470: timer checking step
S480: correction stopping step
400: method for active balancing of a battery
S570: correction checking step
610: DC/DC converter
611: positive terminal
612: terminal
613: negative terminal
640: switching means
$N_1$ - $N_N$: nodes
$G_1$ - $G_2$: group
710: DC/DC converter
714, 715: switching means
716: inductor
717, 718: sensing means

**Claims**

1. A device (200, 800) for active balancing of a battery (B),
   the battery (B) comprising a plurality of units ($U_1$ - $U_N$) connected in series at a plurality of nodes ($N_1$ - $N_{N-1}$),

   the device comprising at least one DC/DC converter (210, 610, 710, $810_1$ - $810_N$) configured to transfer charges between a first group ($G_1$) of the plurality of units ($U_1$ - $U_N$) and a second group ($G_2$) of the plurality of units ($U_1$ - $U_N$),
   wherein at least one of the first group ($G_1$) and second group ($G_2$) comprises a plurality of the units ($U_1$ - $U_N$).

2. The device (200, 800) according to claim 1,
   wherein at least one of the plurality of units ($U_1$ - $U_N$) corresponds to a physical battery cell (C1 - CN).

3. The device (200, 800) according to claim 1,
   wherein at least one of the plurality of units ($U_1$ - $U_N$) corresponds to a plurality of physical battery cells ($C_1$ - $C_N$) connected in parallel and/or in series to each other.

4. The device (200, 800) according to any of claims 1 to 3, further comprising
a plurality of sensing means (230, $S_1$ - $S_N$), each configured to measure at least one characteristic of a respective unit of the plurality of units ($U_1$ - $U_N$) and output a respective plurality of measured characteristics.

5. The device (200, 800) according to claim 4,
wherein the at least one characteristic comprises one or more of:

   - voltage,
   - current,
   - state of charge,
   - state of health,
   - amount of charge,
   - temperature.

6. The device (200, 800) according to claim 4 or 5, wherein the plurality of sensing means (230, $S_1$ - $S_N$) are configured to wirelessly transmit the plurality of measured characteristics.

7. The device (200, 800) according to any of claims 4 to 6, further comprising
a controller (220), configured to control operation of the DC/DC converter (210, 610, 710) based on the plurality of measured characteristics.

8. The device (200, 800) according to claim 7, wherein the controller (220) is configured to carry out a balancing method (300, 400, 500) for a plurality of units, the balancing method (300, 400, 500) comprising the steps of:

   control the plurality of sensing means (230) to measure (S310) the at least one characteristic of the plurality of units ($U_1$ - $U_N$),
   compute (S320) an error value for each of the plurality of nodes ($N_1$ - $N_{N-1}$),
   identify (S330) a maximum error ($E_{MAX}$) among the plurality of error values,
   control the DC/DC converter (210, 610, 710) to transfer (S350) charges between the first group (Gi) and the second group ($G_2$), the first group ($G_1$) and the second group ($G_2$) being defined based on the node ($N_k$) associated to the maximum error ($E_{MAX}$).

9. The device (200, 800) according to claim 8,

   wherein the error value is defined such that the maximum error ($E_{MAX}$) allows identification of a node ($N_k$),
   wherein the identified node ($N_k$) divides the plurality of units ($U_1$ - $U_N$) in the first group ($G_1$) and in the second group ($G_2$) such that, when the steps of measuring (S310), computing (S320), identifying (S330) and transferring (S350) are executed a plurality of times, the plurality of units ($U_1$ - $U_N$) are made to converge to a balanced value.

10. The device (200, 800) according to claim 8 or 9, wherein the error value is a function of a difference between

   - an average of the least one characteristic of the second group ($G_2$) and an average of the at least one characteristic of the plurality of units ($U_1$ - $U_N$), and/or
   - an average of the least one characteristic of the second group ($G_2$) and an average of the at least one characteristic of the first group ($G_1$).

11. The device (200, 800) according to any of claims 8 to 10, wherein
the step of transferring (S350) is performed for a predetermined time and then is stopped.

12. The device (200, 800) according to any of claims 8 to 11, wherein
the step of transferring (S350) is performed until the maximum error ($E_{MAX}$) is lower than a predetermined value.

13. The device (200, 800) according to any previous claim, wherein

   the DC/DC converter (610, 710) comprises a first terminal (611) and a second terminal (612),
   the DC/DC converter (610, 710, $810_1$ - $810_N$) is configured to convert a first DC voltage, provided at the first terminal (611) into a second DC voltage, provided at the second terminal (612), and vice - versa,
   the DC/DC converter (610, 710, $810_1$ - $810_N$) is configured so that, when connected to a plurality of units ($U_1$ -

$U_N$), the first terminal (611) is connected to a positive terminal of the plurality of units ($U_1$ - $U_N$) and the second terminal (612) can be connected to any of the plurality of nodes ($N_1$ - $N_{N-1}$).

*Fig. 1*

*Fig. 2A*

200

230

B

$S_N$

$S_{N-1}$

$S_1$

$U_N$

$N_{N-1}$

$U_{N-1}$

...

$N_1$

$U_1$

210

DC/DC converter

220

Controller

*Fig. 2B*

C

*Fig. 2C*

$C_1$

$C_2$

*Fig. 2D*

$C_1$     $C_2$

*Fig. 3A*

300

```
Measure characteristic                    ⟋ S310

Compute error values E                    ⟋ S320

Identify maximum error E_MAX              ⟋ S330

Maximum error higher than                 ⟋ S340
predetermined threshold?
```

No

Yes

```
Transfer charges between                  ⟋ S350
first and second group
```

*Fig. 3B*

S350

```
Compute correction factor                 ⟋ S351

Transfer charges                          ⟋ S352
based on correction factor
```

*Fig. 4*

400

Measure characteristic — S310

Compute error values E — S320

Identify maximum error $E_{MAX}$ — S330

Maximum error higher than predetermined threshold? — S340

No

Yes

Start timer — S460

Transfer charges — S350

Timer higher than predetermined threshold? — S470

No

Yes

Stop transfer — S480

*Fig. 5*

500

Measure characteristic — S310

Compute error values E — S320

Identify maximum error $E_{MAX}$ — S330

Maximum error higher than predetermined threshold? — S340

No

Yes

Transfer charges — S350

Maximum error lower than predetermined threshold? — S570

No

Yes

Stop transfer — S480

## Fig. 6

*Fig. 7*

*Fig. 8*

Europäisches Patentamt
European Patent Office
Office européen des brevets

## EUROPEAN SEARCH REPORT

Application Number

EP 22 19 8800

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2012 006474 A1 (ESCH HANS-JUERGEN [DE]) 2 May 2013 (2013-05-02) | 1-5,7,13 | INV. H02J7/00 |
| Y | * abstract; figure 1 * <br> * paragraph [0004] - paragraph [0010] * | 6,8, 10-12 | |
| X | CN 110 239 396 A (UNIV SHANDONG) 17 September 2019 (2019-09-17) * abstract; figures 1-4 * * paragraph [0041] - paragraph [0090] * | 1-5,13 | |
| X | US 2014/239878 A1 (YUN JAE-JUNG [KR] ET AL) 28 August 2014 (2014-08-28) | 1-3,5,7, 13 | |
| A | * abstract; figures 2-5 * * paragraphs [0017] - [0019], [0052] - [0090]; claims 10-12 * | 8,9 | |
| X | EP 3 829 023 A1 (SANYO ELECTRIC CO [JP]) 2 June 2021 (2021-06-02) * abstract; figures 1,2 * * paragraph [0013] - paragraph [0071] * | 1-5,7,13 | |
| Y | EP 3 923 441 A1 (LG ENERGY SOLUTION LTD [KR]) 15 December 2021 (2021-12-15) * abstract; figure 1 * | 6 | TECHNICAL FIELDS SEARCHED (IPC) <br> H02J B60L G01R H01M |
| Y | EP 2 075 870 A1 (HONDA MOTOR CO LTD [JP]) 1 July 2009 (2009-07-01) * abstract; figures 5A-7C * * paragraph [0050] - paragraph [0066] * | 8,10-12 | |

The present search report has been drawn up for all claims

| Place of search | Date of completion of the search | Examiner |
|---|---|---|
| Munich | 9 March 2023 | Braccini, Roberto |

EPO FORM 1503 03.82 (P04C01)

## ANNEX TO THE EUROPEAN SEARCH REPORT
## ON EUROPEAN PATENT APPLICATION NO.

EP 22 19 8800

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2023

| Patent document cited in search report | Publication date | Patent family member(s) | Publication date |
|---|---|---|---|
| DE 102012006474 A1 | 02-05-2013 | NONE | |
| CN 110239396 A | 17-09-2019 | NONE | |
| US 2014239878 A1 | 28-08-2014 | KR 20140106982 A | 04-09-2014 |
| | | US 2014239878 A1 | 28-08-2014 |
| EP 3829023 A1 | 02-06-2021 | CN 112534672 A | 19-03-2021 |
| | | EP 3829023 A1 | 02-06-2021 |
| | | JP WO2020022344 A1 | 19-08-2021 |
| | | US 2021320505 A1 | 14-10-2021 |
| | | WO 2020022344 A1 | 30-01-2020 |
| EP 3923441 A1 | 15-12-2021 | EP 3923441 A1 | 15-12-2021 |
| | | JP 2022513955 A | 09-02-2022 |
| | | US 2022077710 A1 | 10-03-2022 |
| | | WO 2020226441 A1 | 12-11-2020 |
| EP 2075870 A1 | 01-07-2009 | EP 2075870 A1 | 01-07-2009 |
| | | JP 2009159726 A | 16-07-2009 |
| | | US 2009167242 A1 | 02-07-2009 |

EPO FORM P0459

For more details about this annex : see Official Journal of the European Patent Office, No. 12/82